# EUROPEAN PATENT APPLICATION

(11) **EP 4 725 757 A1**
(43) Date of publication of application: **15.04.2026**
(21) Application number: 24205366.8
(22) Date of filing: 08.10.2024
(51) Int. Cl.: B60M 1/34, B60L 5/40

(54) **SLOTTED ELECTRIC SUPPLY ELEMENT AND SYSTEM COMPRISING SUCH A SLOTTED ELEMENT**

(71) Applicant: Evias AB, 116 74 Stockholm (SE)
(72) Inventor: Asplund, Gunnar, 171 60 Solna (SE)
(74) Representative: Groth & Co. KB

(57) **Abstract**

Slotted element (1) adapted to co-act with a current collector of an electrically propellable road vehicle for supplying electric power to said vehicle. The slotted element is adapted to extend along a road section at least partly recessed in a road surface. The slotted element comprises an elongated body part (1') with substantially vertical conductor slot(s) (6a-b) extending in the longitudinal direction of the slotted element. Electric conductor(s) (5a-b) is/are arranged in a respective conductor slot. The slotted element comprises collection slot(s) (7a-b) in parallel with the conductor slot(s) (6a-b), the collection slot(s) being disposed at an angle (α) relative to a vertical direction (y) of the slotted element. At least one conductor slot (6a-b) and at least one collection slot (7a-b) partly coincide with their openings (6a'-b', 7a'-b') at least partly overlapping to form a common opening at a vertical upper end of the elongated body part.

## Description

### TECHNICAL FIELD

The invention relates to a slotted element and a system comprising such a slotted element. The slotted element is adapted to co-act with a current collector of an electrically propellable road vehicle for supplying electric power to said vehicle.

### BACKGROUND

Concerns about the environmental impact of combustion of fossil fuels have led to an increased interest in electric vehicles, which have several potential benefits compared to vehicles with conventional internal combustion engines, including a significant reduction of urban air pollution and reduced greenhouse gas emissions.

Presently, electric vehicles are normally charged at stationary charging stations located at parking lots (public or at the home of the vehicle owner) or at rest stops along the highways. Although the latest-generation electric vehicles are provided with high-voltage fast charging technology, charging of the vehicles still takes significantly longer time compared to fuelling a vehicle with fossil fuels. The lengthy charging times also often cause queues at the charging stations during peak hours, thus adding even further to the overall time needed to charge the vehicles.

Furthermore, the expense, weight and limited capacity of the lithium-ion battery packs of today limit widespread use of electric power as the main source of power in heavy vehicles (long haulage trucks and mining vehicles in particular).

WO 2011/123047 proposes complementing the battery of the electric vehicle with electric feeding of the vehicle while driving. A system is disclosed for electric propulsion of a vehicle along a road comprising rail elements having grooves (i.e. slotted elements) provided with electric conductors therein that may be put under voltage and located in longitudinal tracks or channels in the road. The vehicle is equipped with a current collector which during contact with the electric conductors allows for transfer of electric power between the electric conductors and the vehicle to propel the vehicle and charge its battery set

One problem with this system is that the current collector makes mechanical and electrical contact with the bottom part of the groove. Since the rail element is recessed in the road surface it will be exposed to dirt, sand, stones or other debris which may accumulate in the groove and lead to poor and unreliable electrical contact

WO2012134383 discloses a solution to this problem - a current collector which comprises contact elements configured to be brought into sliding mechanical and electrical contact with at least a vertical side wall portion of the groove of the rail element/slotted element (rather than with the bottom of the track). This means that the electric conductors are at least partly arranged in/at the vertical side wall portions of the groove. WO2012134383 furthermore discloses a cleansing device comprising a front portion inclined at an acute angle with respect to the bottom part thereof and comprising elastic material facing the vertical side walls of the groove for cleaning thereof.

Such a current collector has another disadvantage, however. Since the groove needs to be kept quite narrow for safety reasons, the contact elements must be made quite thin (compared to a sliding contact adapted to make contact with an electric conductor at the bottom of the groove). Furthermore, the side wall-mounted electric conductors means that also the electric conductors need to be made thinner compared to an electric conductor at the bottom of the track. This means that the contact elements and the electric conductors are worn down more quickly The side wall-mounting also means that the electric conductors are difficult to replace once worn down.

### SUMMARY

An object of the invention is to provide an improved slotted element (and a system comprising such a slotted element) which solves or at least improves on the problems described above.

These and other objects are achieved by the present invention by means of a slotted element according to the independent claim.

According to a first aspect of the invention, there is provided a slotted element adapted to co-act with a current collector of an electrically propellable road vehicle for supplying electric power to said vehicle. The slotted element is adapted to extend along a road section on which the vehicle is travelling, wherein the slotted element is adapted to be partly or fully recessed in a road surface of said road section with a vertical direction of the slotted element being substantially perpendicular to the road surface. The slotted element comprises at least one electric conductor extending in a longitudinal direction of the slotted element and being adapted to be put under voltage for supplying said electric power. The slotted element comprises an elongated body part with at least one conductor slot extending in said longitudinal direction of the slotted element with its opening at a vertical upper end of the elongated body part. The conductor slot is disposed substantially vertically, wherein the at least one electric conductor is arranged in a respective conductor slot The slotted element further comprises at least one collection slot extending in parallel with one or more of said at least one conductor slot, said collection slot having its opening at a vertical upper end of the elongated body part, said collection slot being disposed at an angle relative to said vertical direction. At least one conductor slot and at least one collection slot partly coincide with their openings at least partly overlapping such as to form a common opening at a vertical upper end of the elongated body part The collection slot may have a greater depth than the conductor slot as seen in the vertical direction.

In other words, a slotted element is provided which in addition to the conductor slot(s) also comprises collection slot(s), where the conductor slot(s) is/are disposed substantially vertically and the collection slot(s) is/are angled relative the vertical direction, and where the conductor slot is arranged partly overlapping/coinciding with one or more collection slots at upper portions thereof such that the openings of the conductor slot and the collection slot(s) overlap to form a combined opening. The openings of the conductor slot and the collection slot(s) may coincide in the sense that the openings are of the same (lateral) width. Alternatively, the opening of the collection slot(s) may fully encompass the opening of the conductor slot, i.e. the opening of the collection slot(s) is (laterally) wider than the opening of the conductor slot with the conductor slot opening fully overlapping with the opening(s) of the collection slot(s). Alternatively, the opening of the conductor slot may fully encompass the opening of the collection slot(s), i.e. the opening of the conductor slot is (laterally) wider than the opening of the collection slot(s) with the opening(s) of the collection slot(s) fully overlapping with the conductor slot opening.

The at least one conductor slot being disposed substantially vertically may also be described in that the at least one conductor slot is aligned substantially in parallel with a vertical plane defined by the vertical and longitudinal directions of the slotted element. Similarly, the at least one collection slot being disposed at an angle relative the vertical direction may also be described in that the at least one collection slot is substantially aligned in a respective plane forming an angle with said vertical plane. It is understood that the at least one conductor slot being arranged substantially vertically does not necessarily imply that it is exactly vertical but can be disposed at an angle within an interval of for example +- 1 degree, or +- 2 degrees, or +-3 degrees, or even +-5 degrees. Alternatively, the vertical plane may be defined by the alignment of the conductor slot and the collection slot(s) being aligned in respective planes forming an angle with said vertical plane.

The at least one electric conductor may be arranged in a respective conductor slot(s) at bottom portion(s) thereof. The collection slots may be disposed at an angle relative to said vertical direction or plane being within an interval from 10 to 45 degrees, such as from 10 to 30 degrees. The invention is based on the insight to introduce one or more additional slot/groove (collection slot(s)) in the slotted element to collect debris, dirt etc. which otherwise would accumulate in the conductor slot. The invention is furthermore based on the insight that by aligning the collection slot(s) at an angle relative the vertical, the collection slot(s) can be arranged partly overlapping/coinciding with the conductor slot at upper portions thereof such that the openings of the conductor slot and the collection slot(s) overlap to form a combined opening, thus allowing for a more narrow combined opening (as seen in a lateral direction being perpendicular to the lengthwise and vertical directions of the slotted element) compared to if the conductor slot and the collection slot(s) were all vertical and arranged (laterally) adjacent to each other. Furthermore, since the collection slot(s) is/are disposed at an angle relative the vertical direction of the slotted element, dirt, debris etc. easily slides/falls into the collection slot

In embodiments, one or more, or each, electric conductor comprises at least one contact surface at a vertical upper end of said electric conductor, wherein one or more of said at least one contact surface is chamfered to form an acute angle relative a horizontal plane of the slotted element, said horizontal plane being perpendicular to the vertical direction of the slotted element. The acute angle may be within an interval from 20 to 70 degrees. Preferably, one or more contact surface is chamfered in the same direction of inclination as the at least one collection slot partly coinciding with the conductor slot in which said electric conductor is arranged. Such embodiments are advantageous since dirt, water etc. slides off the electric conductor into the collections slot, consequently eliminating or reducing the need for cleaning the electric conductor(s).

In embodiments, the common opening has a width of less than 12 mm such as to meet the requirements of IP20. The at least one conductor is disposed in the at least one conductor slot at least 30 mm, or at least 50 mm, below an upper end of the slot The requirements of IP20 may thereby be met even more clearly.

In embodiments, the slotted element according to any of the preceding claims, wherein at least one conductor slot partly coincides with two collection slots with their openings at least partly overlapping such as to form a common opening at a vertical upper end of the elongated body part, wherein said two collection slots are arranged symmetrically (angled in opposite directions relative the vertical direction or plane). The two collection slots may be described as mirrored relative a vertical plane defined by the longitudinal and vertical directions of the conductor slot Such embodiments with two collection slots for a conductor slot may be advantageous in particularly dirty environments since the collection capacity is increased.

In embodiments, the slotted element further comprises heating means arranged adjacent to one or more, or each, of the electric conductors. The heating means may for example be resistive cables arranged along/in parallel with one or more, or each, electric conductor. Heating means is advantageous since the risk of water freezing to ice on the conductor(s) is decreased.

In embodiments, the elongated body of the slotted element is provided with an electrically insulating layer at the upper end thereof adjacent to said common opening(s). Preferably, the insulating layer is arranged at both lateral sides of the common opening(s). The slotted element advantageously furthermore comprises a layer of semiconducting material, such as semiconducting plastic, sandwiched between said electrically insulating layer and said elongated body Such embodiments are advantageous since the current collector, or more specifically at least the portions thereof (contact elements or parts thereof) adapted to extend into the slots, do not need to be electrically insulated. Thereby, a simplified and more durable current collector can be achieved.

In embodiments, the slotted element comprises at least one conduit for housing electric cables and/or switches connected to one or more of the at least one electric conductor, said at least one conduit being disposed at one or more lateral sides of the slots, said at least one conduit extending in the longitudinal direction of the slotted element Such embodiments are advantageous since the electric cables and/or switches and the slotted element can be conveniently installed as one unit in the road. The at least one conduit may be formed integrally with the elongated body

According to a second aspect of the invention, there is provided a system comprising at least one slotted element according to the first aspect of the invention or an embodiment thereof and at least one electrically propellable road vehicle comprising a current collector adapted to co-act with the slotted element for supplying electric power to said vehicle, wherein the at least one slotted element is arranged extending along a road section on which the vehicle is adapted to travel, said slotted element being arranged recessed in a road surface of said road section with a vertical direction of the slotted element being substantially perpendicular to the road surface.

In embodiments, the electric conductor(s) is/are arranged in respective conductor slot(s) at bottom portion(s) thereof, and the current collector is provided with one or more contacts elements configured to make sliding mechanical and electrical contact with a respective electric conductor(s). The contact elements may be adapted to be displaced into respective slots, for example by means of being attached to a respective current collector arm.

In embodiments, the system further comprises a cleaning device comprising at least one cleaning arm adapted to be displaced into the at least one collection slot for cleaning thereof.

In embodiments of the system where the slotted element comprises electrically insulating layer(s) at the upper end thereof, at least the portions of the contact elements being configured to extend into the slots are not electrically insulated.

The features of the embodiments described above are combinable in any practically realizable way to form embodiments having combinations of these features. Further, all features and advantages of embodiments described above with reference to the first aspect of the invention may be applied in corresponding embodiments of the system according to the second aspect of the invention and vice versa.

### BRIEF DESCRIPTION OF THE DRAWINGS

Above discussed and other aspects of the present invention will now be described in more detail using the appended drawings, which show presently preferred embodiments of the invention, wherein:
fig. 1a shows a cross-section view of an embodiment of the slotted element according to the first aspect of the invention, the cross-section being taken along a vertical plane A-A being perpendicular to the lengthwise direction of the slotted element;
fig. 1b shows a view from vertically above the embodiment in fig. 1a;
fig. 2 shows an embodiment of the system according to the second aspect of the invention comprising an embodiment of the slotted element being the same as shown in fig. 1-2 and an electrically propellable vehicle;
fig. 3 shows the embodiment in fig. 2 shown without the vehicle but instead with a cleaning device;
fig. 4 shows another embodiment of the slotted element according to the first aspect of the invention, and
fig. 5 shows yet another embodiment of the system according to the second aspect of the invention.

### DETAILED DESCRIPTION

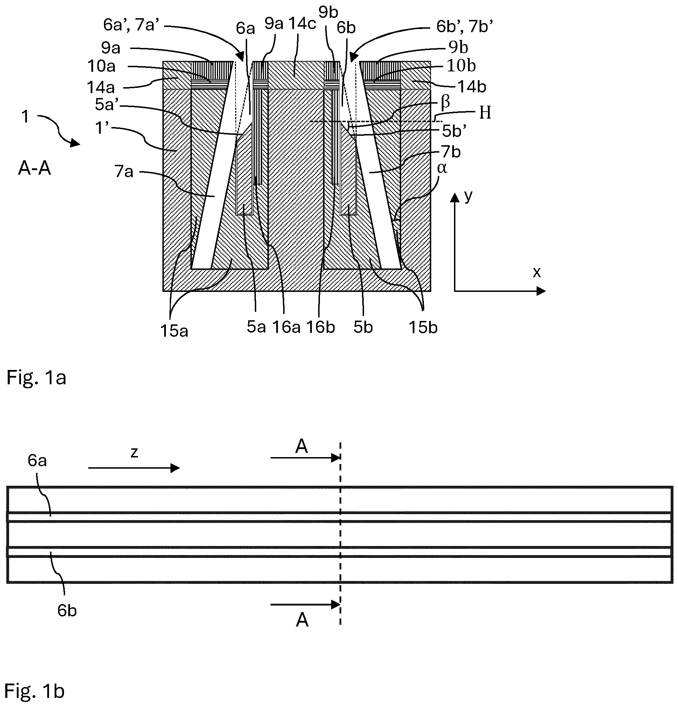

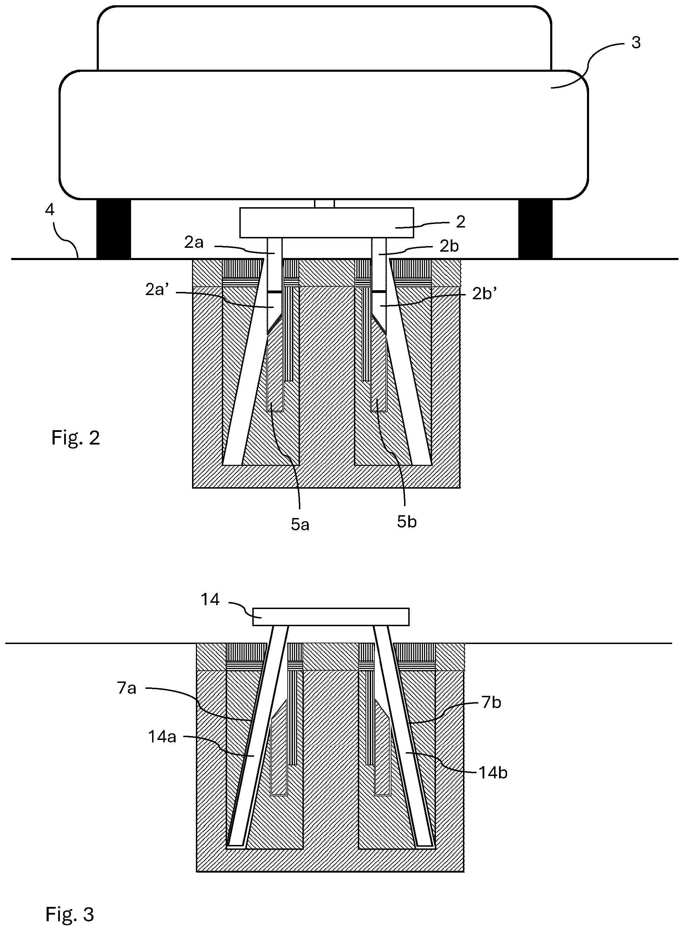

Fig. 1a shows a cross-section view of an embodiment of the slotted element according to the first aspect of the invention. Fig. 1b shows a view from vertically above the embodiment in fig. 1a. The cross-section in fig. 1a is taken along a vertical plane A-A being perpendicular to the lengthwise direction of the slotted element. The slotted element 1 is adapted to be at least partly recessed in a road surface of said road section with a vertical direction y of the slotted element being substantially perpendicular to the road surface. A lateral direction x of the slotted element is defined perpendicular to the vertical direction. The vertical plane A-A can thus be described as defined by the vertical and lateral directions y, x. The slotted element comprises two electric conductors 5a, 5b extending in a lengthwise/longitudinal direction z of the slotted element (see fig. 1b). As explained below with reference to fig. 2, the electric conductors are adapted to be put under voltage for supplying electric power to a vehicle. The slotted element comprises an elongated body part 1' with two conductor slots 6a, 6b extending in the longitudinal direction z of the slotted element with the respective openings 6a', 6b' at a vertical upper end of the elongated body part, the conductor slots 6a, 6b being disposed substantially vertically In both conductor slots, an electric conductor 5a, 5b is arranged at a bottom portion thereof. The slotted element further comprises two collection slots 7a, 7b extending in parallel with the conductor slots 6a, 6b and being disposed at an angle α relative to the vertical direction y.

The collection slots having respective openings 7a', 7b' at a vertical upper end of the elongated body part 1'. As can be seen in fig. 1a, the collection slot has a greater depth than the conductor slot as seen in a vertical direction y.

Conductor slot 6a and collection slot 7a partly coincide with their openings 6a', 7a' partly overlapping such as to form a common opening at the vertical upper end of the elongated body part 1'. Correspondingly, conductor slot 6b and collection slot 7b partly coincide with their openings 6b', 7b' partly overlapping such as to form a common opening. Since collection slot 7a/ 7b is slightly wider than the respective conductor slot 6a/6b and also angled, the opening 7a'/7b' is wider than the opening 6a'/6b' as seen in the lateral direction x. Thus, the opening 7a'/7b' fully encompasses opening 6a'/6b'. The common opening in this embodiment is thus the same as the openings 7a', 7b', which have a width in the lateral direction x being just below 12 mm.

Each electric conductor 5a, 5b comprises a contact surface 5a', 5b' at a vertical upper end thereof. The contact surfaces 5a', 5b' are chamfered in the same direction of inclination as the adjacent collection slot 7a, 7b to form angle β=45 degrees relative a horizontal plane H of the slotted element. The horizontal plane is perpendicular to the vertical direction of the slotted element, i.e. is defined by the lengthwise and lateral directions z, x. The electric conductors 5a, 5b are disposed in the respective conductor slot 6a-b approximately 50 mm below an upper end of the slot/vertical upper end of the slotted element 1.

The elongated body part 1' is formed by a portion of strong plastic (such as polyester reinforced plastic) formed as an upwardly facing E with isolating portions 15a, 15b therein in which the slots 6a-b, 7a-b are formed. The isolating portions 15a-b are made from a plastic material such as HDPE. The slotted element is provided with electrically insulating layers 9a, 9b (of for example aluminum oxide) at the upper ends of the isolating plastic portions adjacent to the common openings 6a'/7a' and 6b'/7b'. Furthermore, a layer 10a, 10b of semiconducting material such as semiconducting plastic is sandwiched between the portions 15a, 15b and the insulating layers 9a, 9b. Stainless steel portions 14a, 14b, 14c are arranged at the upper end body part 1' adjacent to, and between the insulating/semiconducting layers 9a/10a, 9b/10b. In other embodiments, the insulating layers and the semiconducting layers can be omitted with for example the stainless-steel portions 14a-c covering the whole vertical upper surface of the slotted element (except for the openings of the slots).

The slotted element further comprises hard isolating portions 16a, 16b arranged recessed in a wall of a respective conductor slot 6a, 6b at an opposite side of the conductor slot relative to its coinciding collection slot. Hard isolating portions 16a-b are made from a harder isolating material (such as aluminum oxide) than the isolating plastic portions 15a-b. In other embodiments, the hard isolating portions 16a-b can be omitted, and the isolating portions 15a-b can instead as a whole be made from a harder/more durable material.

Figures 2 and 3 shows an embodiment of the system according to the second aspect of the invention comprising an embodiment of the slotted element being the same as shown in fig. 1a-b and an electrically propellable vehicle 3 (see fig. 2) and a cleaning device 14 (see fig. 3). The slotted element 1 is arranged fully recessed in the road section 4 with the vertical upper end flush with the road surface. A vertical direction of the slotted element is perpendicular to the road surface. In the figure, the road surface is illustrated as a plane surface which means that the road surface defines a horizontal plane (defined as described above with reference to fig. 1a).

The electrically propellable road vehicle 3 comprises a current collector 2 adapted to co-act with the slotted element 1 for supplying electric power to the vehicle for charging and/or propulsion thereof. The current collector 2 comprises contact elements 2a-b being vertically displaceable to displace contact elements 2a-b into the slots of the slotted element 1 to make sliding contact (connect mechanically and electrically) with a respective conductor 5a-b. As disclosed in applicant's previous patents, the contact elements can be displaceable for example by being attached to rotatable current collector arms. Furthermore, the current collector, either as a whole or the contact elements thereof, is/are laterally displaceable relative the vehicle to laterally align the contact elements with the slots.

The contact elements are formed with bottom (contact) surfaces thereof being chamfered at 45 degrees relative to the horizontal plane to achieve largest possible contact surface with the contact surfaces 5a', 5b' of the conductors 5a, 5b. In this embodiment, the contact elements are formed from copper with a respective tip portion 2a', 2b' (comprising the bottom/contact surface) which is made from tungsten carbide or another similar material.

Because of the isolating/semiconducting properties of layers 9a-b, 10a-b, the contact elements 2a-b do not need to be electrically insulated. In embodiments without such layers, the contact elements need to be electrically insulated (except for the tip portions) to avoid short-circuit with the (usually grounded) slotted element.

The cleaning device 14 comprises two cleaning arms 14a-b adapted to fit into the collection slots 7a-b. The cleaning arms may be vertically displaceable (for example rotatable) to displace cleaning arms 14a-b into the slots of the slotted element 1. The cleaning device is adapted to be moved in a (forward) lengthwise direction of the slotted element with the cleaning arms in the position as shown in fig. 3. The cleaning arms may be provided with a front portion (as seen in the forward direction) which is inclined at an acute angle relative to a bottom portion of the cleaning arms/the bottom of the collection slots to displace dirt, debris etc. forwards/upwards when the cleaning device is moved in said forward/lengthwise direction of the slotted element The cleaning device can be fitted to a vehicle, either a special maintenance vehicle or to the electrically propellable vehicle 2.

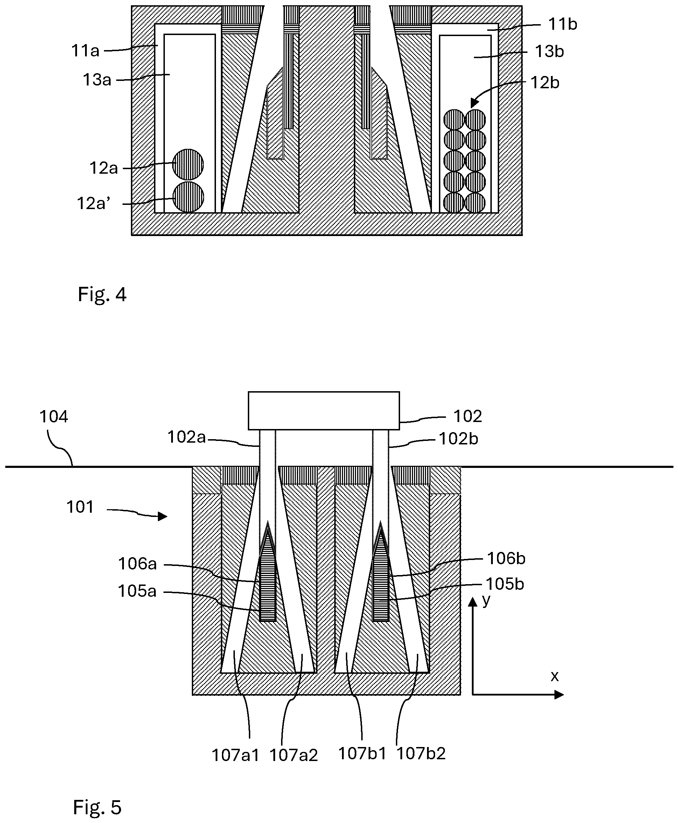

Fig. 4 shows yet another embodiment of the slotted element according to the first aspect of the invention. The cross-section in fig. 4 is taken along a vertical plane being parallel to the lengthwise direction of the slotted element in the same manner as in fig. 1a. The embodiment corresponds to the embodiment in fig. 1a-b with the exception that the elongated body part 1' is wider and comprises conduits 11a, 11b at each lateral side of the isolating portions 15a-b and thus at each lateral side of the slots. Apart from this difference, the description above with reference to fig. 1a-b applies to this embodiment too. In the conduits 11a-b, electric cables 12a1-a2 and 12b and electric switches 13a, 13b are arranged for feeding and switching on/off electric power to the electric conductors 5a-b. In this embodiment, a set of high-current electric cables 12a1-a2 and corresponding switch 13a is provided in conduit 11a and a set of lower-current cables 12b and corresponding switch 13b is provided in conduit 11b such as to realize an embodiment with first and second sub-sets of vehicle-external charging devices, where the second sub-set are capable of providing higher charging current/power (such as in the embodiment shown in fig. 6 of WO2024052334, which is hereby incorporated by reference in its entirety).

Fig. 5 shows another embodiment of the system according to the second aspect of the invention comprising a slotted element 101 (being an embodiment of the first aspect of the invention) and an electrically propellable vehicle (not shown) comprising a current collector 102 adapted to co-act with the slotted element 101 for supplying electric power to the vehicle for charging and/or propulsion thereof. The slotted element 101 is arranged fully recessed in the road section 104 with the vertical upper end flush with the road surface. A vertical direction y of the slotted element is perpendicular to the road surface. The cross-section of the slotted element 101 in fig. 5 is taken along a vertical plane being parallel to the lengthwise direction of the slotted element in the same manner as in fig. 1a.

The slotted element 101 corresponds to the slotted element in fig. 1a with the main difference being that each conductor slot 106a, 106b partly coincides with two collection slots 107a1-a2, 107b1-b2 which are arranged pair-wise angled in opposite directions. The openings of the pairs of collection slots 107a1-a2/107b1-b2 coincide and encompass the opening of the respective conductor slot 106a/106b. As a consequence of this, the electric conductors 105a, 105b are shaped differently than in fig. 1a, in this embodiment each with two contact surfaces at a respective vertical upper end thereof, where the contact surfaces are chamfered in the same direction of inclination as the adjacent collection slot 107a1-a2/107b1-b2 to form a V-shape. Furthermore, there is no semiconducting layer in this embodiment Apart from these differences, the description above concerning the embodiment in fig. 1a applies also to the embodiment in fig. 5. Other embodiments correspond to that shown in fig. 5 except that it comprises a semiconducting layer in a corresponding way as in fig. 1a.

The current collector 102 comprises contact elements 102a-b being vertically displaceable (for example rotatable) to displace contact elements 102a-b into the slots of the slotted element 101 to make sliding contact (connect mechanically and electrically) with a respective conductor 105a-b. Furthermore, the current collector, either as a whole or the contact elements thereof, is/are laterally displaceable relative the vehicle to laterally align the contact elements with the slots. The contact elements 102a-b are formed with bottom (contact) surfaces each being formed as a V-shaped recess to achieve largest possible contact surface with the upper contact surfaces of the conductors 105a, 105b. The contact elements can be formed from copper with a harder tip portion such as tungsten carbide (as in fig. 2) or solely from copper or the harder material.

The system may also comprise a cleaning device similar to that in fig. 3 except for that it comprises four cleaning arms.

The description above and the appended drawings are to be considered as non-limiting examples of the invention. The person skilled in the art realizes that several changes and modifications may be made within the scope of the invention. For example, although all embodiments are shown with two electric conductors, it is understood that variations of these embodiments having three or even more electric conductors/conductor slots can be made within the scope of the invention. Embodiments having only one electric conductor/conductor (complemented with a ground conductor at the vertical upper end of the slotted element) are also foreseeable. Furthermore, other materials than mentioned above can be used.

## Claims

1. Slotted element (1) adapted to co-act with a current collector (2) of an electrically propellable road vehicle (3) for supplying electric power to said vehicle,
said slotted element being adapted to extend along a road section (4) on which the vehicle is travelling, wherein said slotted element is adapted to be at least partly recessed in a road surface of said road section with a vertical direction (y) of the slotted element being substantially perpendicular to the road surface,
said slotted element comprising at least one electric conductor (5a-b) extending in a longitudinal direction (z) of the slotted element and being adapted to be put under voltage for supplying said electric power,
said slotted element comprising an elongated body part (1') with at least one conductor slot (6a-b) extending in said longitudinal direction of the slotted element with its opening (6a'-b') at a vertical upper end of the elongated body part, said conductor slot being disposed substantially vertically, wherein said at least one electric conductor (5a-b) is arranged in a respective conductor slot,
said slotted element further comprising at least one collection slot (7a-b) extending in parallel with one or more of said at least one conductor slot (6a-b), said at least one collection slot having its respective opening (7a'-b') at a vertical upper end of the elongated body part, said collection slot being disposed at an angle (α) relative to said vertical direction (y),
wherein at least one conductor slot (6a-b) and at least one collection slot (7a-b) partly coincide with their openings (6a'-b', 7a'-b') at least partly overlapping such as to form a common opening at a vertical upper end of the elongated body part.

2. The slotted element according to claim 1, wherein one or more electric conductor (5a-b) comprises at least one contact surface (5a'-b') at a vertical upper end of said electric conductor, wherein one or more of said at least one contact surface is chamfered to form an acute angle (β) relative a horizontal plane (H) of the slotted element, said horizontal plane being perpendicular to the vertical direction of the slotted element, said acute angle being within an interval from 20 to 70 degrees.

3. The slotted element according to claim 2, wherein said one or more contact surface (5a'-b') is chamfered in the same direction of inclination as the at least one collection slot (7a-b) partly coinciding with the conductor slot in which said electric conductor is arranged.

4. The slotted element according to any of the preceding claims, wherein said common opening has a width of less than 12 mm.

5. The slotted element according to any of the preceding claims, wherein said at least one electric conductor (5a-b) is disposed in the at least one conductor slot (6a-b) at least 30 mm below an upper end of the slot.

6. The slotted element according to any of the preceding claims, wherein said at least one electric conductor (5a, 5b) is arranged at a bottom portion of the respective conductor slot (6a, 6b).

7. The slotted element according to any of the preceding claims, wherein at least one conductor slot (106a, 106b) partly coincides with two collection slots (107a-b, 107c-d) with their openings (106a', 107a'-b') at least partly overlapping such as to form a common opening at a vertical upper end of the elongated body part, wherein said two collection slots (107a-b, 107c-d) are angled in opposite directions relative the vertical direction (y).

8. The slotted element according to any of the preceding claims, further comprising heating means arranged adjacent to one or more of the electric conductors.

9. The slotted element according to any of the preceding claims, wherein said elongated body (1') is provided with an electrically insulating layer (9a-b) at the upper end thereof adjacent to said common opening.

10. The slotted element according to claim 9, further comprising a layer (10a-b) of semiconducting material sandwiched between said electrically insulating layer (9a-b) and said elongated body (1').

11. The slotted element according to any of the preceding claims, further comprising at least one conduit (11a-b) for housing electric cables (12a-c) and/or switches (13a-b), said at least one conduit being disposed at one or more lateral sides of the slots, said at least one conduit extending in the longitudinal direction of the slotted element

12. System comprising at least one slotted element according to any of the preceding claims and at least one electrically propellable road vehicle (3) comprising a current collector (2) adapted to co-act with the slotted element (1) for supplying electric power to said vehicle, wherein the at least one slotted element is arranged extending along a road section (4) on which the vehicle is adapted to travel, said slotted element being arranged recessed in a road surface of said road section (4) with a vertical direction of the slotted element being substantially perpendicular to the road surface.

13. System according to claim 12, further comprising a cleaning device (14) comprising at least one cleaning arm (14a-b) adapted to be displaced into the at least one collection slot (7a-b) for cleaning thereof.

14. System according to claim 12 or 13, wherein said slotted element (1) is a slotted element according to claim 9 or 10, and wherein said current collector (2) comprises contact elements (2a-b) adapted to be displaced into the slots to make sliding electrical contact with a respective electric conductor (5a-b), wherein at least portions of said contact elements being configured to extend into the slots are not electrically insulated.
